# EUROPÄISCHE PATENTSCHRIFT

(11) **EP 1 634 026 B1**
(45) Veröffentlichungstag und Bekanntmachung des Hinweises auf die Patenterteilung: **27.06.2007**
(21) Anmeldenummer: 04722348.2
(22) Anmeldetag: 22.03.2004
(51) Int. Cl.: F27B 1/22, C04B 2/12

(54) **VERFAHREN ZUM BRENNEN VON STÜCKIGEM BRENNGUT MIT SCHWACHGAS**
PROCESS FOR BURNING LUMPS OF MATERIAL WITH LEAN GAS
PROCEDE DE COMBUSTION DE MATIERES EN MORCEAUX AU MOYEN D'UN GAZ PAUVRE

(30) Priorität: 03.06.2003 DE 10324953
(43) Veröffentlichungstag der Anmeldung: 15.03.2006
(73) Patentinhaber: Maerz-Ofenbau AG, 8027 Zürich (CH)
(72) Erfinder: Piringer, Hannes, 5712 Beinwil am See (CH)
(74) Vertreter: Quehl, Horst Max
(86) Internationale Anmeldenummer: PCT/IB2004/000955
(87) Internationale Veröffentlichungsnummer: WO 2004/106828

(56) Entgegenhaltungen:
- EP-A- 0 560 715
- AT-B- 390 248
- CH-A- 372 237
- DE-A- 4 446 007
- DE-A- 19 647 442

## Beschreibung

Die Erfindung betrifft ein Verfahren zum Brennen von stückigem Brenngut, insbesondere von Kalkstein, in einem Regenerativschachtofen, mit mindestens zwei durch einen Überströmkanal miteinander verbundenen Ofenschächten, in denen das Brenngut eine obere Vorwärmzone, eine mittlere Brennzone und untere Kühlzone passiert, wobei Verbrennungsluft im Bereich der Vorwärmzone und Kühlluft im Bereich der Kühlzone zugeführt wird und eine Zufuhr von Brenngas mit einem unteren Heizwert von weniger als 7,5 Megajoule (MJ) pro m³ₙ periodisch wechselnd zu einem der Schächte über Brennerlanzen erfolgt.

Regenerativschachtöfen dieser Art, die auch als MAERZ-Öfen bezeichnet werden, zeichnen sich gegen über Schachtöfen anderer Art durch eine besonders hohe Wirtschaftlichkeit aus. Es hat sich jedoch gezeigt, dass beim zunehmend gewünschten Einsatz von sogenanntem Schwachgas, d.h. eines Verbrennungsgases mit verhältnismäßig geringem Heizwert, wie es z.B. als Nebenprodukt in Metallhütten oder als Biogas mit einem unteren Heizwert von weniger als 7,5 Megajoule (MJ) pro m³ anfällt, sich die Prozessparameter von Regenerativschachtöfen nachteilig verändern und ihr Wirkungsgrad aufgrund wesentlich höherer Abgasmengen und Abgastemperaturen wesentlich geringer ist. Außerdem erfordern höhere Abgastemperaturen zusätzliche Maßnahmen, um z.B. durch Abgaskühler oder durch Zumischung von Frischluft eine Überhitzung nachgeschalteter Filteranlagen zu verhindern. Andererseits führt die Verwendung von Schwachgas durch verringerte Einbringung von Schwefel zu einer in dieser Hinsicht verbesserten Produktqualität. AT311888 oder AT-B-390248 offenbart ein Verfahren zum Brennen von karbonathaltigem, mineralischem Brenngut, das in einem Schacht von oben nach unten eine Vorwärmzone, eine Brennzone und eine Kühlzone durchläuft und wobei ein minderwertiger Brennstoff angewendet wird.
Zur gewährleistung eines hohen thermischen Wirkungsgrades wird vorgewärmte, zusätzliche Verbrennungsluft in einem Ringzone am Ende der Brennzone zugemischt. Die Vorwärmung kann durch Wärmeaustauch mit Rauchgase in einem Wärmetauscher erzielt werden. Durch die CH-372237 wurde auch vorgeschlagen, nach dem gleichen Prinzip wie in solchen Öfen die Verbrennungsluft vorgewärmt wird, zusätzlich auch das Brenngas im Ofen vorzuwärmen.

Der Erfindung liegt die Aufgabe zugrunde, ein Verfahren der genannten Art zu finden, das die genannten Nachteile vermeidet und das somit bei gutem thermischen Wirkungsgrad den Einsatz eines Brenngases mit verhältnismäßig niedrigem unteren Heizwert von weniger als 7,5 MJ/m³ₙ bei guter Produktqualität ermöglicht.

Die Lösung der genannten Aufgabe erfolgt erfindungsgemäß aufgrund der kennzeichnenden Merkmale des Patentanspruchs 1.

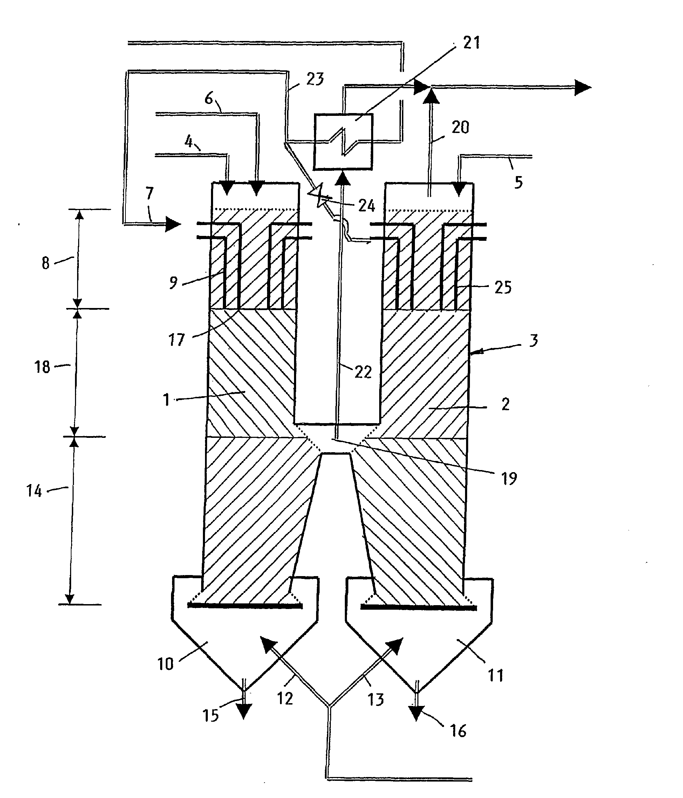

Vorteilhafte Ausführungsformen des erfindungsgemäßen Verfahrens sind Gegenstand der abhängigen Patentansprüche und der folgenden Beschreibung an Hand der Zeichnung zu entnehmen. Diese zeigt eine schematische Schnittdarstellung eines Regenerativofen mit zwei Parallelschächten.

Wie an sich bekannt, wird den beiden Schächten 1 und 2 des Ofens 3 ein stückiges Brenngut chargenweise mit einer Stückgrösse z.B. im Bereich von 40 bis 80 mm zugegeben, wie durch die Pfeile 4 und 5 angedeutet ist. Die Zufuhr von Verbrennungsluft, ebenfalls von oben, entsprechend dem Pfeil 6 und von Brenngas entsprechend dem Pfeil 7 über in der Vorwärmzone 8 vertikal angeordnete Brennlanzen 9, erfolgt in Zeitabständen von z.B. 15 Minuten abwechselnd zu einem der Schächte 1 oder 2. Außerdem wird vom unteren Austragsbereich 10,11 beider Schächte 1,2 kontinuierlich entsprechend den Pfeilen 12,13 Kühlluft zugeführt, so dass das gebrannte Produkt nach Passieren der Kühlzone 14 gekühlt in Richtung der Pfeile 15,16 abgeführt werden kann. Die an den Mündungen 17 der Brennlanzen 9 sich ausbildenden Flammen erhalten vorgewärmte Verbrennungsluft, da sie während der vorangegangenen Betriebsperiode vorgewärmtes Brenngut durchströmt. Die Vorwärmung des Brenngutes in der Vorwärmzone 8 erfolgt jeweils im benachbarten Schacht (2), indem die Brenngase nach Passieren der Brennzone 18 über einen Verbindungskanal 19 in den benachbarten Schacht 2 überströmen und diesen als Abgas nach oben entsprechend dem Pfeil 20 verlassen.

Entsprechend dem zeichnerisch dargestellten Ausführungsbeispiel der Erfindung erfolgt die Vorwärmung des Brenngases in einem Wärmetauscher 21 im Wärmeaustausch mit einem aus dem Verbindungskanal 19 über ein Leitung 22 in relativ geringer Menge abgezweigten Heißgasstrom, der anschließend zu dem Abgasstrom entsprechend dem Pfeil 20 abgeführt wird. Die durch den Wärmetauscher 21 geführte Leitung 23 kann beim Wechsel der Betriebsweise zum benachbarten Schacht 2 über ein Ventil 24 zu den Brennlanzen 25 des benachbarten Schachtes 2 geschaltet werden. Auf diese Weise ist ein wirtschaftlicher Betrieb des Ofens 3 mit Schwachgas mit einem unteren Heizwert von weniger als 7,5 MJ/m³ und beispielsweise von 4 MJ/m³ möglich.

Entsprechend einer weiteren Ausführungsform der Erfindung kann eine Vorwärmung des Brenngases zusätzlich zur Vorwärmung in dem Wärmeaustauscher 21 in der Vorwärmzone durch die dort vorgewärmte Verbrennungsluft erfolgen, indem die Oberfläche der Brennlanzen 9,25 zumindest auf ihrer Außenseite z.B. durch Rippen vergrößert ausgeführt wird.

## Patentansprüche

1. Verfahren zum Brennen von stückigem Brenngut, insbesondere von Kalkstein, in einem Regenerativschachtofen (3), mit mindestens zwei durch einen Überströmkanal (19) miteinander verbundenen Ofenschächten (1,2), in denen das Brenngut eine obere Vorwärmzone(8), eine mittlere Brennzone (18) und untere Kühlzone (14) passiert, wobei Verbrennungsluft im Bereich der Vorwärmzone (14) und Kühlluft im Bereich der Kühlzone (14) zugeführt wird und eine Zufuhr von Brenngas mit einem unteren Heizwert von weniger als 7,5 Megajoule (MJ) pro m³ₙ periodisch wechselnd zu einem der Schächte (1,2) über Brennerlanzen (9,25) erfolgt, **dadurch gekennzeichnet, dass** das den Brennerlanzen (9,25) zugeführte Brenngas im Wärmeaustausch mit Prozessgas des Brennprozesses vorgewärmt wird.

2. Verfahren nach Anspruch 1, **dadurch gekennzeichnet, dass** das Brenngas in der Vorwärmzone (8) durch Wärmeaustausch mit der dort vorgewärmte Verbrennungsluft zusätzlich erwärmt wird.

3. Verfahren nach Anspruch 2, **dadurch gekennzeichnet, dass** das Brenngas beim Durchströmen von sich durch die Vorwärmzone (8) erstreckenden Brennerlanzen (9,25) zusätzlich vorgewärmt wird, indem deren Oberfläche zumindest auf ihrer Außenseite vergrößert ausgeführt ist.

4. Verfahren nach einem der Ansprüche 1 bis 3, **dadurch gekennzeichnet, dass** das Brenngas im Wärmeaustausch mit einem aus dem Ofen (3) abgezweigten Teil des Prozessgases vorgewärmt wird, indem ein außerhalb des Ofens vorgesehener Wärmetauscher (21) einerseits mit einer von einer Abzeigstelle am Ofen kommenden Prozessgasleitung (22) und andererseits mit einer zu den Brennerlanzen (9,25) führenden Brenngasleitung (23) verbunden ist.

5. Verfahren nach Anspruch 4, **dadurch gekennzeichnet, dass** die Abzweigung eines Teils des Prozessgases zur Vorwärmung des Brenngases vom Überströmkanal (19) des Ofens aus erfolgt.

6. Verfahren nach einem der Ansprüche 1 bis 5, **dadurch gekennzeichnet, dass** es mit einem Brenngas betrieben wird, dessen unterer Heizwert weniger als 5 MJ/m³ beträgt.

## Claims

1. Method of burning lumps of material, in particular limestone, in a regenerative shaft kiln (3) with at least two kiln shafts (1,2) interconnected by an overflow line (19), in which shafts the material to be burned passes through an upper pre-heating zone (8), a central burning zone (18) and a lower cooling zone (14), whereby combustion air is supplied in the area of the pre-heating zone (8), cooling air is supplied to the cooling zone (14) and the supply of combustion gas having a low calorific value of less than 7.5 Mega joules (MJ) per m³ₙ alternates periodically to each of the shafts (1,2) through burner lances (9.25), **characterized in that** that the combustion gas is pre-heated in heat exchange with process gas of the burning process.

2. Method according to Claim 1, **characterized in that** the combustion gas in the pre-heating zone (8) is additionally heated by the pre-heated combustion air therein.

3. Method according to Claim 2, **characterized in that** the combustion gas is additionally pre-heated while flowing through burner lances (9, 25) extending into the pre-heating zone (8), the surface of the lances being designed enlarged, at least on the outer side.

4. Method according to one of the Claims 1 to 3, **characterized in that** the combustion gas is pre-heated in heat exchange with a branched off part of the process gas branched off from the kiln (3), **in that** a heat exchanger (21) provided outside the kiln is connected on one side to a process gas pipe (22) coming from a branching position on the kiln and on the other side to a combustion gas pipe (23) leading to burner lances (9, 25).

5. Method according to Claim 4, **characterized in that** a part of the process gas for pre-heating the combustion gas is branched off from the overflow line (19) of the kiln.

6. Method according to one of the claims 1 to 5, **characterized in that** it is operated with combustion gas the lower calorific value of which is less than 5 MJ/m³.

## Revendications

1. Procédé pour la combustion de matière combustible en morceaux, en particulier de la pierre à chaux, dans un four droit régénérateur (3), comprenant au moins deux puits de four (1, 2) reliés entre eux par un canal de trop-plein (19) et dans lesquels la matière combustible traverse une zone de préchauffage supérieure (8), une zone de combustion centrale (18) et une zone de refroidissement inférieure (14), de l'air à combustion étant amené dans la région de la zone de préchauffage (8) et de l'air de refroidissement étant amené dans la région de la zone de refroidissement (14), et un apport de gaz combustible avec une valeur calorifique minimale de moins de 7,5 mégajoule (MJ) pro m³ₙ ayant lieu périodiquement et alternativement vers un des puits (1, 2) par l'intermédiaire de lances de brûleur (9, 25), **caractérisé en ce que** le gaz combustible amené aux lances de brûleur (9, 25) est préchauffé pendant l'échange de chaleur avec du gaz de processus du processus de combustion.

2. Procédé selon la revendication 1, **caractérisé en ce que** le gaz combustible est échauffé en supplément dans la zone de préchauffage (8) par l'échange de chaleur avec l'air à combustion préchauffé en cet endroit.

3. Procédé selon la revendication 2, **caractérisé en ce que** le gaz combustible est préchauffé en supplément pendant l'écoulement dans des lances de brûleur (9, 25) s'étendant à travers la zone de préchauffage (8), **en ce que** leur surface est exécutée avec un agrandissement, tout du moins sur leur côté extérieur.

4. Procédé selon l'une des revendications 1 à 3, **caractérisé en ce que** le gaz combustible est préchauffé pendant l'échange de chaleur avec une partie du gaz de processus dérivée du four (3), par le fait qu'un échangeur de chaleur (21) prévu en dehors du four est relié d'une part à une conduite de gaz de processus (22) qui arrive depuis un point de dérivation sur le four et d'autre part à une conduite de gaz combustible (23) qui mène vers les lances de brûleur (9, 25).

5. Procédé selon la revendication 4, **caractérisé en ce que** la dérivation d'une partie du gaz de processus pour le préchauffage du gaz combustible a lieu depuis le canal de trop-plein (19) du four.

6. Procédé selon l'une des revendications 1 à 5, **caractérisé en ce qu'**il est mis en oeuvre avec un gaz combustible dont la valeur calorifique minimale se monte à moins de 5 MJ/m³.
